# EUROPÄISCHE PATENTANMELDUNG

(11) **EP 1 510 772 A1**
(43) Veröffentlichungstag der Anmeldung: **02.03.2005**
(21) Anmeldenummer: 04019868.1
(22) Anmeldetag: 21.08.2004
(51) Int. Cl.: F27D 3/00

(54) **Roboter-Greifvorrichtung**

(30) Priorität: 28.08.2003 DE 10339650
(71) Anmelder: Maschinen- und Stahlbau, Julius Lippert GmbH & Co. KG, 92690 Pressath (DE)
(72) Erfinder:
(74) Vertreter: LOUIS- PÖHLAU- LOHRENTZ

(57) **Zusammenfassung**

Es wird eine Roboter-Greifvorrichtung zum Manipulieren von Gegenständen (12, 12'), insbesondere von stoß- und/oder bruchempfindlichem Gut (12, 12') beschreiben, wobei die Roboter-Greifvorrichtung (10) ein an einen Roboter anschließbares Basiselement (14) und eine am Basiselement (14) angebrachte Greiferaufhängung (18) aufweist. Zwischen der Greiferaufhängung (18) und dem Basiselement (14) ist eine Gewichtsentlastung (20) vorgesehen. An der Greiferaufhängung (18) ist ein Greiferorgan (22) in einer ersten Raumrichtung (28) und eine Gegenhaltereinrichtung (24) in einer zur ersten Raumrichtung (28) mindestens annähernd senkrechten zweiten Raumrichtung (30) hin und her verstellbar angeordnet. An der Greiferaufhängung (18) ist an der vom Greiferorgan (22) abgewandten Seite eine Kleinteile-Greifereinrichtung (58) befestigt, die eine Anzahl Saugköpfe (60) aufweist, mit denen ein relativ kleiner bzw. flacher Gegenstand (12') gegriffen und temporär festgehalten, d.h. manipuliert werden kann.

## Beschreibung

Die Erfindung betrifft eine Roboter-Greifvorrichtung zum Manipulieren von Gegenständen, insbesondere von stoß- und/oder bruchempfindlichem Gut, wobei die Roboter-Greifvorrichtung ein an einen Roboter anschließbares Basiselement und eine am Basiselement angebrachte Greiferaufhängung aufweist, wobei zwischen der Greiferaufhängung und dem Basiselement eine Gewichtsentlastung vorgesehen ist, und an der Greiferaufhängung ein Greiferorgan in einer ersten Raumrichtung und eine Gegenhaltereinrichtung in einer zur ersten Raumrichtung mindestens annähernd senkrechten zweiten Raumrichtung hin und her verstellbar angeordnet sind.

Zu der gemäß Artikel 54 EPÜ zu berücksichtigenden DE 10238458 A1 beschriebenen Roboter-Greifvorrichtung sind das Greiferorgan und die Gegenhaltereinrichtung zum Greifen und temporären Festhalten relativ großer Gegenstände, bei denen es sich bspw. um Sanitärgegenstände wie WC-Schüsseln, Bidetschüsseln, Urinale oder dergl. handelt, geeignet. Relativ kleine und relativ flache Gegenstände können mit dieser Roboter-Greifvorrichtung d.h. mit dem Greiferorgan und der Gegenhaltereinrichtung nur sehr bedingt oder überhaupt nicht angekippt und gegriffen, d.h. temporär festgehalten werden.

Deshalb liegt der vorliegenden Erfindung die Aufgabe zugrunde, die Roboter-Greifvorrichtung der eingangs genannten Art so weiter zu bilden, daß sie sich auch zum Greifen und temporären Festhalten von vergleichsweise kleinen, flachen Gegenständen eignet.

Diese Aufgabe wird bei einer Roboter-Greifvorrichtung der eingangs genannten Art erfindungsgemäß durch die Merkmale des Kennzeichenteiles des Anspruchs 1, d.h. dadurch gelöst, daß an der Greiferaufhängung an der vom Greiferorgan abgewandten Seite eine Kleinteile-Greifereinrichtung befestigt ist. Als vorteilhaft hatte sich hierbei erwiesen, wenn die Kleinteile-Greifereinrichtung eine Anzahl Saugköpfe aufweist, die vom Greiferorgan wegweisend orientiert sind. Die Saugköpfe sind mit einer Vakuumquelle verbindbar bzw. gesteuert verbunden.

Die Saugköpfe können an einem Plattenelement angebracht sein, das mit der Greiferaufhängung mittels einer schräg auskragenden Verbindungseinrichtung verbunden sein kann.

Mit einer solchermaßen ausgebildeten erfindungsgemäßen Roboter-Greifvorrichtung ist es einfach und zeitsparend möglich mit dem Greiferorgan und der Gegenhaltereinrichtung relativ große Gegenstände zu greifen und temporär festzuhalten und mit der Saugköpfe aufweisenden Kleinteile-Greifereinrichtung relativ kleine, flache Gegenstände zuverlässig zu greifen und temporär festzuhalten.

Handelt es sich bei dem jeweils zu greifenden kleinen Gegenstand bspw. um einen zu brennenden Keramikgegenstand oder dergl., so kann es zweckmäßig sein, wenn an der Greiferaufhängung der Roboter-Greifvorrichtung in der Nachbarschaft des Greiferorganes eine Vakuumgreifeinrichtung zum Greifen eines Unterlagen-Flächenelementes, bspw. einer Brennunterlagen, für den jeweiligen Gegenstand vorgesehen ist. Dann ist es nämlich möglich, mit Hilfe der Vakuumgreifeinrichtung zuerst auf einer Unterlage ein entsprechendes Unterlagen-Flächenelement zu positionieren und anschließend mit Hilfe der Kleinteileeinrichtung auf dem Unterlage-Flächenelement einen zugehörigen Gegenstand zu positionieren.

Bei einer Ausbildung der zuletzt genannten Art kann die Greiferaufhängung eine Konsole aufweisen, an der das Greiferorgan in der ersten Raumrichtung verstellbar und an der die Vakuumgreifeinrichtung vorgesehen ist. Die Vakuumgreifeinrichtung kann mindestens einen Saugkopf, vorzugsweise mehr als einen Saugkopf aufweisen. Die Saugköpfe der Vakuumgreifeinrichtung sind dann zweckmäßigerweise mit der weiter oben in Verbindung mit der Kleinteilegreifereinrichtung erwähnten Vakuumquelle strömungstechnisch gesteuert verbunden.

Mit Hilfe der erfindungsgemäßen Roboter-Greifvorrichtung ist es also in vorteilhafter Weise möglich, sowohl kleine flache Gegenstände als auch große und großvolumige Gegenstände zu manipulieren.

Weitere Einzelheiten, Merkmale und Vorteile ergeben sich aus der nachfolgenden Beschreibung eines in der Zeichnung schematisch in einer Seitenansicht dargestellten Ausführungsbeispieles der erfindungsgemäßen Roboter-Greifvorrichtung. Es zeigen:
- Figur 1: die Roboter-Greifvorrichtung seitlich neben einem zu manipulierenden Gegenstand, bei dem es sich um einen relativ großen, großvolumigen Gegenstand handelt, und
- Figur 2: eine der Figur 1 ähnliche Seitenansicht, wobei die Roboter-Greifvorrichtung jedoch um eine horizontal Achse um 180 ° geschwenkt worden ist und die Kleinteile-Greifereinrichtung einen vergleichsweise kleinen Gegenstand greift.

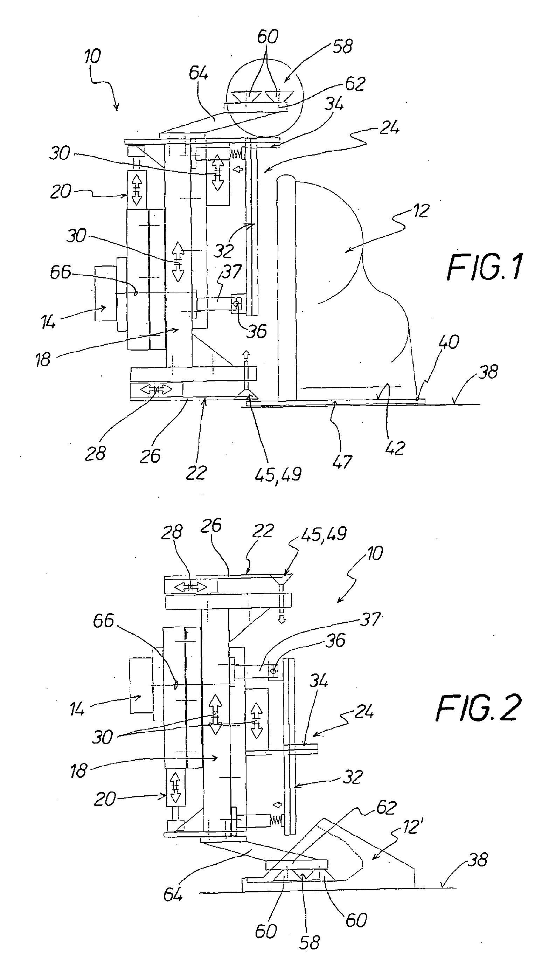

Figur 1 zeigt eine Ausbildung der Robotor-Greifvorrichtung 10 und seitlich neben der Roboter-Greifvorrichtung 10 und von dieser beabstandet einen Gegenstand 12, der mit der Roboter-Greifvorrichtung 10 manipuliert, d.h. gegriffen und temporär festgehalten werden kann. Die Roboter-Greifvorrichtung 10 weist ein Basiselement 14 auf, das an einen (nicht dargestellten) Mehrgelenkarm eines ebenfalls nicht dargestellten Roboters anschließbar ist. Am Basiselement 14 ist eine Greiferaufhängung 18 begrenzt beweglich angebracht. Zwischen der Greiferaufhängung 18 und dem Basiselement 14 ist eine Gewichtsentlastung 20 vorgesehen.

An der Greiferaufhängung 18 sind ein Greiferorgan 22 und eine Gegenhalteeinrichtung 24 beweglich vorgesehen. Das Greiferorgan 22 ist von einem Greiferblech 26 gebildet, das in bezug auf die Greiferaufhängung 18 in einer ersten Raumrichtung 28 gesteuert verstellbar ist. Die Gegenhaltereinrichtung 24 ist in einer zweiten Raumrichtung gesteuert verstellbar. Diese zweite Raumrichtung ist durch den Doppelpfeil 30 verdeutlicht.

Die Gegenhaltereinrichtung 24 weist ein Anschlagorgan 32, das sich in der zweiten Raumrichtung 30 erstreckt, und ein Gegenhalterorgan 34 auf, das sich in der ersten Raumrichtung 28 erstreckt. Die Gegenhaltereinrichtung 24 ist um eine Verbindungsachse 36 begrenzt federnd verschwenkbar. Die Verbindungsachse 36 ist an einer Konsole 37 vorgesehen, die von der Greiferaufhängung 18 wegsteht.

Der Gegenstand 12 steht auf einem Untergrund 38, er ist mit Hilfe der Gegenhaltereinrichtung 24 um eine Kippkante 40 aufkippbar, so daß sich zwischen dem Untergrund 38 und der Auflagefläche 42 des Gegenstandes 12 ein (nicht gezeichneter) Keilraum ergibt, in den das Greiferblech 26 des Greiforganes 22 in der ersten Raumrichtung 28 einschiebbar ist. Anschließend oder gleichzeitig wird die mit ihrem Anschlagorgan 32 am Gegenstand 12 anliegende Gegenhalteeinrichtung 24 in der zweiten Raumrichtung 30 gesteuert bewegt, bis das Gegenhalterorgan 34 der Gegeneinrichtung 24 am Gegenstand 12 zur Anlage kommt, so daß der Gegenstand 12 zwischen dem Greiferorgan 22 und dem Gegenhalteorgan 34 festgeklemmt, d.h. festgehalten wird. Danach kann der Gegenstand manipuliert werden.

An der Greiferaufhängung 18 ist eine Vakuumgreifeinrichtung 45 für Unterlagenflächenelemente 47 vorgesehen. Die Vakuumgreifereinrichtung 45 weist eine Anzahl Saugköpfe 49 auf. Mit Hilfe der Saugköpfe 49 ist es möglich, unter der Auflagefläche 42 des Gegenstandes 12, d.h. zwischen dieser und dem Untergrund 38 ein Unterlageflächenelement 47 anzuordnen.

Um mit Hilfe der Roboter-Greifvorrichtung 10 nicht nur große Gegenstände 12 manipulieren zu können (siehe Figur 1), sondern auch vergleichsweise kleine Gegenstände 12' (siehe Figur 2), ist an der Greiferaufhängung 18 an der vom Greiferorgan 22 abgewandten Seite eine Kleinteile-Greifereinrichtung 58 befestigt. Die Kleinteile-Greifereinrichtung 58 weist eine Anzahl Saugköpfe 60 auf, die vom Greiferorgan 22 wegweisend orientiert sind. Die Saugköpfe 60 sind an einem Plattenelement 62 angebracht. Das Plattenelement 62 ist mit der Greiferaufhängung 18 mittels einer schräg auskragenden Verbindungseinrichtung 64 fest verbunden. In Figur 2 ist die Kleinteile-Greifereinrichtung 58 in ihrer aktiven Greif- und Halteposition gezeichnet, wobei der Gegenstand 12' auf einem Untergrund 38 liegt.

Wie sich aus einem Vergleich der Figuren 1 und 2 ergibt, ist die Roboter-Greifvorrichtung 10 in Figur 2 um 180° um eine Horizontalachse 66 verschwenkt, um mit der Kleinteile-Greifereinrichtung 58 einen Gegenstand 12' manipulieren zu können.

Gleiche Einzelheiten sind in den Figuren 1 und 2 jeweils mit denselben Bezugsziffern bezeichnet, so daß es sich erübrigt, in Verbindung mit den Figuren alle Einzelheiten jeweils detailliert zu beschreiben.

## Patentansprüche

1. Roboter-Greifvorrichtung zum Manipulieren von Gegenständen (12, 12'), insbesondere von stoß- und/oder bruchempfindlichem Gut (12, 12'), wobei die Roboter-Greifvorrichtung (10) ein an einen Roboter anschließbares Basiselement (14) und eine am Basiselement (14) angebrachte Greiferaufhängung (18) aufweist, wobei zwischen der Greiferaufhängung (18) und dem Basiselement (14) eine Gewichtsentlastung (2) vorgesehen ist, und an der Greiferaufhängung (18) ein Greiferorgan (22) in einer ersten Raumrichtung (28) und eine Gegenhaltereinrichtung (24) in einer zur ersten Raumrichtung (28) mindestens annähernd senkrechten zweiten Raumrichtung (3) hin und her verstellbar angeordnet sind.
**dadurch gekennzeichnet,**
**daß** an der Greiferaufhängung (18) an der vom Greiferorgan (22) abgewandten Seite eine Kleinteile-Greifereinrichtung (58) befestigt ist.

2. Roboter-Greifvorrichtung nach Anspruch 1,
**dadurch gekennzeichnet,**
**daß** die Kleinteile-Greifereinrichtung (58) eine Anzahl Saugköpfe (60) aufweist, die vom Greiferorgan wegweisend orientiert sind.

3. Roboter-Greifvorrichtung nach Anspruch 2,
**dadurch gekennzeichnet,**
**daß** die Sauköpfe (6) an einem Platenelement (62) angebracht sind, das mit der Greiferaufhängung (18) mittels einer schräg auskragenden Verbindungseinrichtung (64) verbunden ist.

4. Roboter-Greifvorrichtung nach einem der Ansprüche 1 bis 3,
**dadurch gekennzeichnet,**
**daß** an der Greiferaufhängung (18) in der Nachbarschaft des Greiferorganes (22) eine Vakuum-Greifeinrichtung (45) zum Greifen eines Unterlagenflächenelementes (47), vorzugsweise einer Brennunterlage, für den jeweiligen Gegenstand (12), 12') vorgesehen ist.

5. Roboter-Greifeinrichtung nach Anspruch 4,
**dadurch gekennzeichnet,**
**daß** die Greiferaufhängung (18) eine Konsole aufweist, an der das Greiforgan (22) in der ersten Raumrichtung (28) verstellbar und an der die Vakuum-Greifeinrichtung (45) vorgesehen ist.

6. Roboter-Greifvorrichtung nach Anspruch 4,
**dadurch gekennzeichnet,**
**daß** die Vakuum-Greifeinrichtung (45) mindestens einen Saugkopf, vorzugsweise mehrere Saugköpfe (49) aufweist.

7. Roboter-Greifvorrichtung nach Anspruch 6,
**dadurch gekennzeichnet,**
**daß** sich der/jeder Saugkopf (49) mindestens annähernd bis zur Ebene des als Greiferblech (26) ausgebildeten Greiferorganes (22) erstreckt.
